# FASCICULE DE BREVET EUROPEEN

(11) **EP 1 874 519 B1**
(45) Date de publication et mention de la délivrance du brevet: **02.07.2008**
(21) Numéro de dépôt: 06726148.7
(22) Date de dépôt: 28.03.2006
(51) Int. Cl.: B29C 45/17, B29C 31/00

(54) **DISPOSITIF DE MANIPULATION D'OUTILLAGES**
VORRICHTUNG ZUR HANDHABUNG VON WERKZEUGEN
DEVICE FOR MANIPULATING TOOLS

(30) Priorité: 30.03.2005 FR 0503068
(43) Date de publication de la demande: 09.01.2008
(73) Titulaire: Montabone, Pascal, 74230 Thones (FR)
(72) Inventeur: Montabone, Pascal, 74230 Thones (FR)
(74) Mandataire: Gasquet, Denis
(86) Numéro de dépôt international: PCT/FR2006/000683
(87) Numéro de publication internationale: WO 2006/103346

(56) Documents cités:
- DE-A1- 3 801 032
- FR-A- 2 242 170
- PATENT ABSTRACTS OF JAPAN vol. 017, no. 286 (M-1422), 2 juin 1993 (1993-06-02) -& JP 05 016176 A (TOSHIBA MACH CO LTD), 26 janvier 1993 (1993-01-26)
- PATENT ABSTRACTS OF JAPAN vol. 009, no. 155 (M-392), 29 juin 1985 (1985-06-29) -& JP 60 030566 A (HINO JIDOSHA KOGYO KK), 16 février 1985 (1985-02-16)

## Description

La présente invention concerne un dispositif de manipulation de moules notamment d'injection permettant d'intervenir sur des outillages comme par exemple des moules d'injections, hors de la presse pour la maintenance, le nettoyage, le polissage, l'ajustage, la préparation à l'injection et toutes les autres interventions nécessaires sur les moules.

L'invention est décrite dans le cas d' interventions sur un moule d'injection, mais le dispositif selon l'invention peut être utilisé pour des manipulations sur des outillages de tout type, comme par exemple, des outils de découpe, de vulcanisation, de pliage et autres.

La présente invention permet, une fois le moule assemblé en deux parties sortie de la presse, de séparer les deux parties du moule (de l'ouvrir) et de faire pivoter chacune des parties selon l'orientation désirée, afin d'obtenir un large accès a toutes les parties du moule à travailler.

Dans le domaine de l'industrie plastique, les moules d'injections ont souvent besoin d'être sortis des presses pour leur entretien, leur maintenance, comme par exemple leur nettoyage, leur polissage, leur ajustement, et leur préparation à l'injection, la fabrication et leur assemblage ainsi que leur mise au point.

A l'heure actuelle, les moules sont sortis des presses à l'aide d'un palan, puis posé directement sur le sol ou sur un espace de travail. L'opérateur doit ensuite l'ouvrir en séparant ses les parties du moule afin d'avoir accès aux faces qui nécessitent une intervention.

Les problèmes apparaissent lorsque le moule est posé sur le sol, ou sur un plan de travail, et quand l'opérateur veut l'ouvrir et faire pivoter ses différentes parties. Actuellement, dans les entreprises, la manipulation des moules se fait avec le palan, ce qui implique de multiples manutentions. Aussi, il y a un risque important de dégradation de l'outillage, de coincement des colonages et des blessures corporelles. De plus, du fait d'une manipulation laborieuse et longue, les machines et le personnel sont immobilisés pendant un long moment, et les zones attribuées à la maintenance du fait de l'accumulation de moule volumineux ouverts sont encombrées par du matériel inactif. Notons aussi que, les risques de blessures sont élevés, faute de dispositif adapté à la manipulation de moules qui souvent sont lourds et volumineux.

On connaît aussi des systèmes permettant une manipulation des moules d'injection qui comportent des moyens pour ouvrir les moules et les incliner. Mais ces derniers sont équipés d'une mécanique compliquée est coûteuse tel que des vérins pour assister les mouvements des moules et nécessite, contrairement au dispositif de l'invention, de fixer ou brider les partie du moule sur le système, ce qui empêche l'accès à certaines parties du moule. Ces moyens connus ne permettent donc pas une manipulation manuelle et un accès sur toutes les parties du moule.

Un autre système est connu de DE-A- 3801032

La présente invention a pour objectif de remédier aux inconvénients précités à l'aide de moyens simples, fiables, faciles à mettre en oeuvre et peu onéreux. Elle favorise la production d'une usine d'injection grâce au dispositif de manipulation de moules d'injection de l'invention, qui optimise le temps de travail lorsque le moule est sortie de la presse pour y faire les travaux de maintenance. Grâce à l'invention, le temps de maintenance sur les moules est réduit, et les machines pourront donc fonctionner pendant plus de temps, optimisant le temps de travail des machines. Ceci favorise aussi le travail des moulistes pour la fabrication et la mise au point nécessitent de nombreuses ouvertures et fermetures des moules.

Selon sa caractéristique principale le dispositif de manipulation de moules notamment d'injection comprenant deux parties, ledit dispositif est du type constitué d'un châssis et au moins un plateau formant table, destiné à recevoir le moule. Il comprend deux plateaux disposés horizontalement dont l'un au moins est disposé coulissant sur le châssis afin de pouvoir être déplacé en translation par rapport au l'autre plateau, d'une position rapprochée vers une position éloignée et inversement, afin de permettre l'ouverture manuelle du moule.

Selon une autre caractéristique du dispositif de manipulation, au moins un des plateaux comprend un plateau inférieur et un plateau supérieur pivotant mobile en rotation par rapport au plateau fixe correspondant, selon un axe vertical.

Par ailleurs, le châssis du dispositif de manipulation comporte des rails glissières sur lesquelles coulissent le/les plateaux, et des moyens de guidages sont prévus entre le/les plateaux coulissants et le/les rails glissières. Les moyens de guidage et de coulissement de l'invention sont constitués par des chemins de billes.

Selon une autre caractéristique du dispositif de manipulation comporte un châssis composé de deux poutres longitudinales maintenues en écartement par deux poutres latérales parallèles.

Par ailleurs, le dispositif de l'invention comporte des butés dont au moins une est amovible et repositionnable afin d'arrêter et de positionner le/les plateaux coulissants par rapports aux rails glissières. Et comporte des moyens de blocages et d'indexages du/des plateaux rotatifs en positions.

D'autres caractéristiques et avantages de l'invention se dégageront de la description qui va suivre en regard des dessins annexés qui ne sont donnés qu'à titre d'exemples non limitatifs.

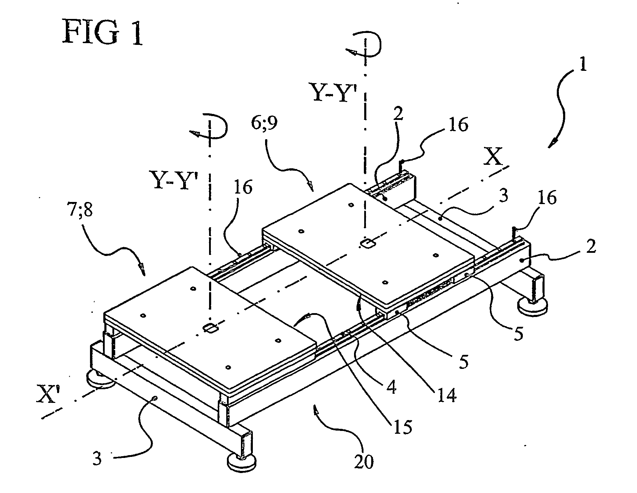

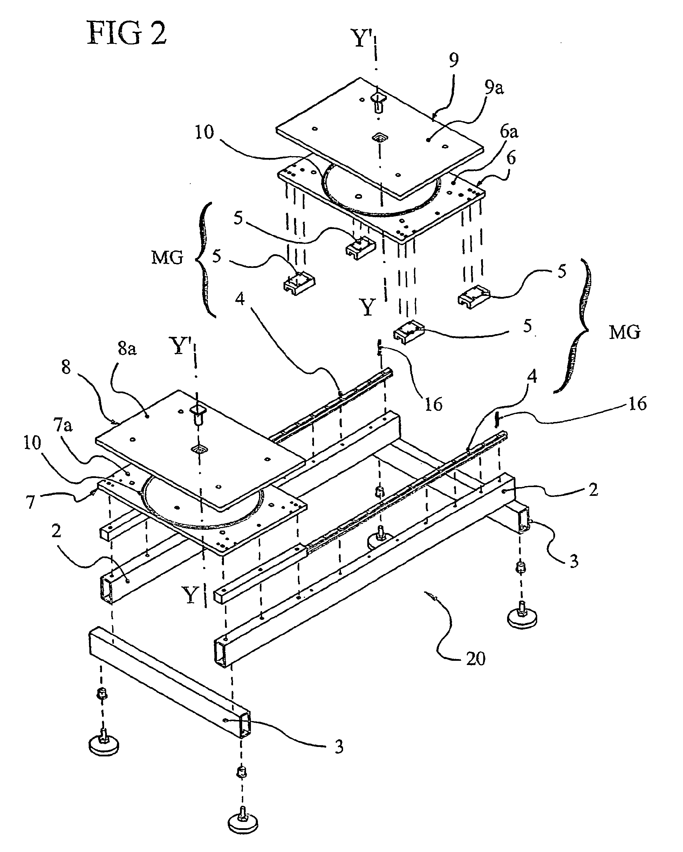

Les figures 1 à 5 illustrent un mode de réalisation du dispositif de manipulation selon l'invention.
La figure 1 est une vue en perspective du dispositif, la table mobile en translation ayant été déplacée.
La figure 2 est une vue éclatée du dispositif.
Les figures 3a et 3b sont des vues du dispositif portant un moule en position fermée.

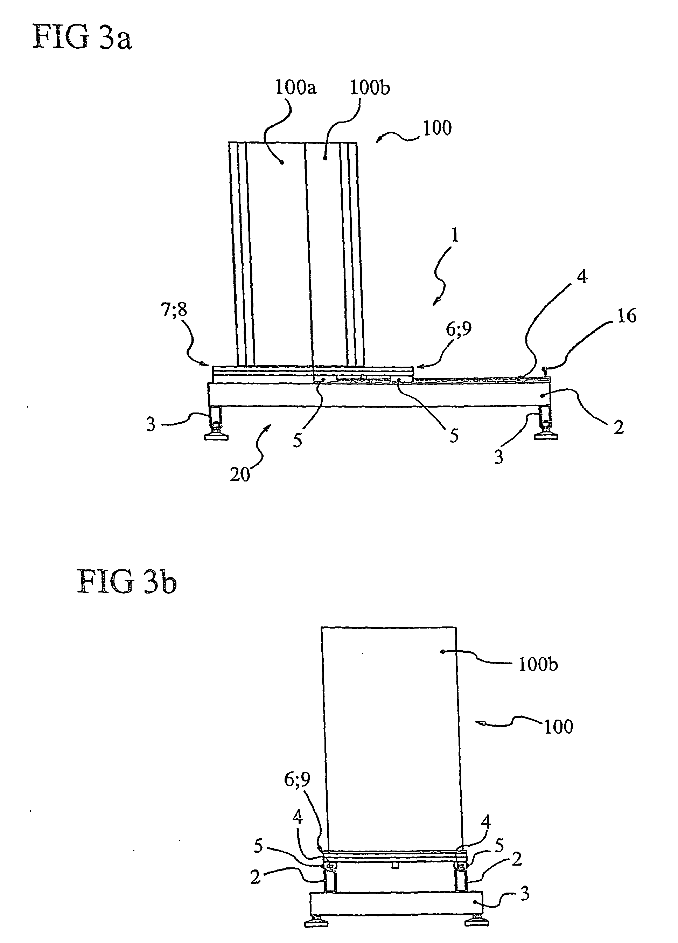

La figure 3a est une vue latérale.
La figure 3b est une vue en bout.

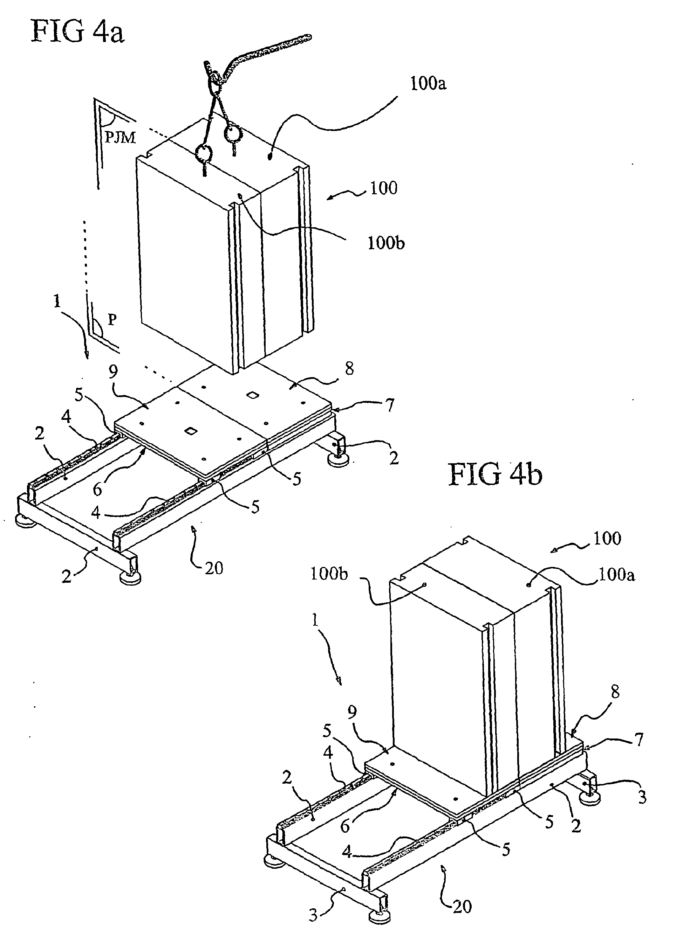

Les figures 4a à 4e illustrent le processus d'utilisation du dispositif.
La figure 4a illustre en perspective le dispositif de l'invention avec le moule arrivant sur les tables de l'invention.
La figure 4b illustre en perspective le dispositif de l'invention avec le moule fermé, posé sur les tables de l'invention.

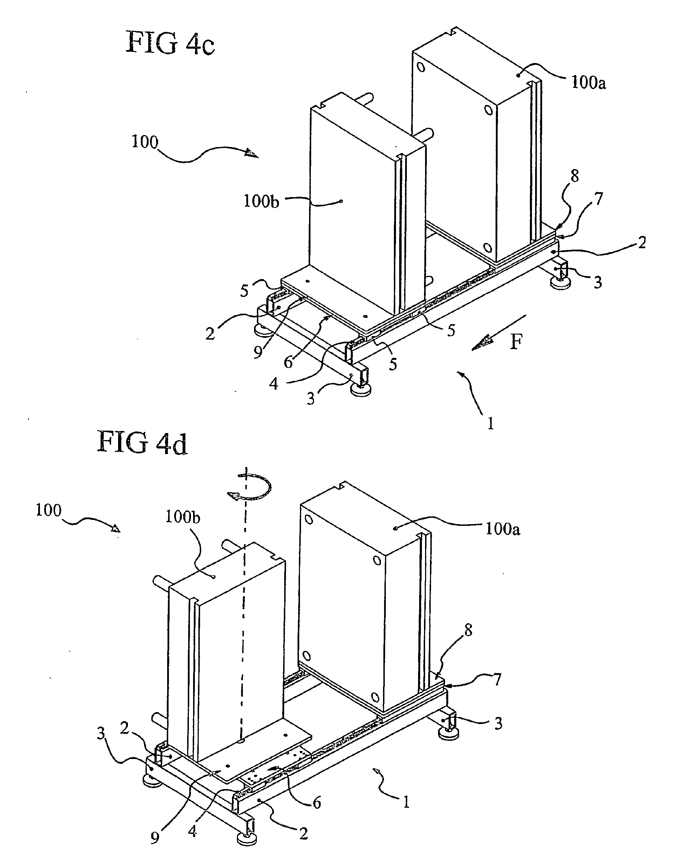

La figure 4c illustre en perspective le dispositif de l'invention avec le moule ouvert, posé sur les tables de l'invention.
La figure 4d illustre en perspective le dispositif de l'invention avec le moule ouvert, dont une partie est pivotée.

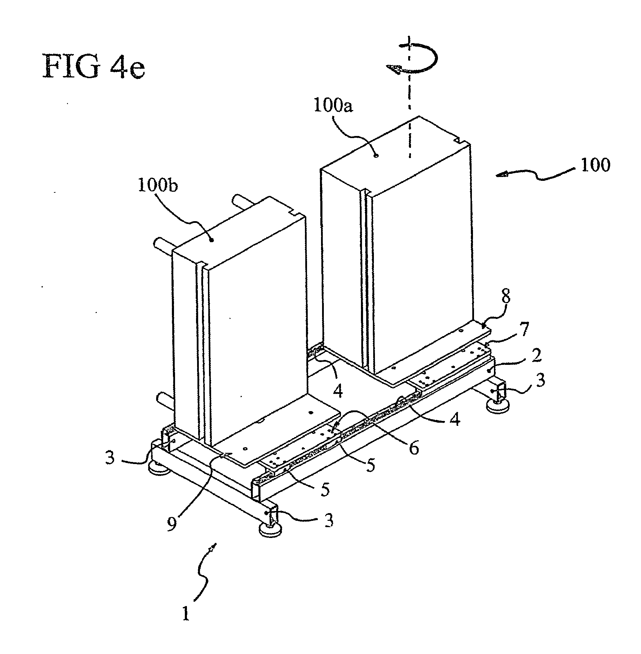

La figure 4e illustre en perspective le dispositif de l'invention avec le moule ouvert, dont deux parties sont pivotées.

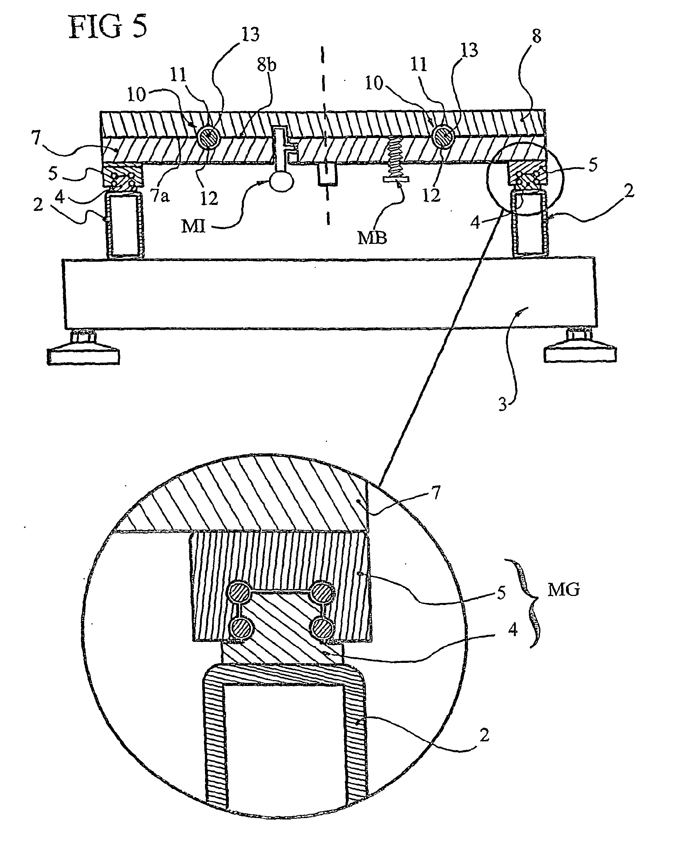

La figure 5 représente, selon en coupe transversale, les moyens de guidage, de roulements et les moyens d'indexages du plateau mobile et pivotant.

Selon l'invention, le dispositif de manipulation (1) de moules d'injection comprend un châssis (20) composé de deux poutres longitudinales (2) maintenues en écartement par deux poutres latérales parallèles (3).

Lesdites deux poutres latérales (3) qui sont parallèles entre elles, sont situés avantageusement proche des extrémités des poutres longitudinales (2).

L'ensemble châssis (20) est donc de forme générale parallélépipédique. Selon le mode préféré de l'invention, lesdites poutres (2, 3) sont, à titre d'exemple non limitatif réalisées par des profilés de sections rectangulaires mais peuvent aussi être réalisées, par exemple, dans des profilés mécano-soudé en I du type IPN ou autres, sans sortir du champ de l'invention.

Selon le mode préféré de l'invention, les poutres longitudinales (2) comportent, sur leur face supérieure, des moyens de guidage (MG) et de glissement formés par des rails glissières (4), constitués par exemple au un profilé de guidage fixé sur les poutres longitudinales (2).

Selon le mode préféré de l'invention, les profilés de guidage (4) sont fixés sur les poutres longitudinales (2) par exemple par vissage, mais peuvent être fixées par tout autre moyen approprié, comme par soudure.

Aussi, lesdits rails glissières (4) sont avantageusement équipés de moyens de glissement tel que, des portions lisses et glissantes, ou par exemple par des chemins de billes.

Selon une caractéristique de l'invention, les profilés de guidage (4) constituant les rails glissières, formant les moyens de guidage, supportent au moins un plateau inférieur coulissant (6) et au moins un plateau inférieur fixe (7). En effet, selon le mode préféré de l'invention, un des plateaux, est fixé au châssis par soudure, vissage, ou autres moyens, et l'autre plateau mobile (6) coulisse sur les rails glissières pour se déplacer en translation, et prendre une position rapprochée telle qu'illustré aux figures 3a, 3b, 4a, 4b, et une position éloignée telle qu'illustrée aux figures 4c, 4d, 4e.

Ainsi, ledit plateau inférieur coulissant (6) se déplace le long du rail glissière (4) selon l'axe longitudinal (X, X'). Des moyens de glissement sont aménagés sur les rails glissières de l'invention, ou/et sur le plateau mobile (6), lui-même ou sur des chariots (5) faisant interface entre les rails glissières (4) et le plateau (6).

Selon le mode préféré de l'invention, le plateau coulissant (6) est guidé par des moyens de guidages. Ces moyens de guidages sont constitués par des chariots (5) mobiles qui ont, de façon non limitative, la forme d'un U renversé fixé sous le plateau coulissant (6). En effet, la forme de chacun des chariots (5) de l'invention, est de forme correspondante avec le rail glissière (4), limitant le jeu de débattement horizontal et vertical. Le déplacement desdits chariots (5) sur le rail glissière est favorisé et facilité par des moyens de roulements, par exemple, ou par touts autres moyens sans pour autant sortir du champ de l'invention.

Bien entendu, on pourra utiliser tous moyens connus permettant le guidage et le glissement du plateau inférieur coulissant (6) sans pour autant sortir du champ de l'invention.

Selon l'invention, le dispositif de manipulation (1) de moules d'injection comporte un plateau inférieur fixe (7) surmonté avantageusement d'un plateau supérieur (8) mobile en rotation, selon un axe vertical (Y, Y').

Notons que dans le mode préféré, le plateau inférieur (7) est fixé au châssis (20) de l'invention par tout moyens appropriés tel que vissage soudage ou autre.

Le pivotement du plateau supérieur (8) est facilité par des moyens tels que par chemin de billes (10) ou autre moyen approprié disposé entre les deux plateaux, à savoir le plateau fixe et le plateau mobile.

Selon le mode préféré de l'invention, les moyens facilitant le pivotement d'un plateau par rapport à l'autre sont constitués par deux gorges (11, 12) circulaire correspondantes, l'une sur la surface supérieur (7a) du plateau inférieur (7) et l'autre sur la surface inférieur (8b) du plateau supérieur. Les deux gorges (11 , 12) étant en regard l'une et l'autre, pour former un logement destiné à recevoir les billes (13) pour former un chemin circulaire permettant le roulement des billes.

Ajoutons que le plateau inférieur coulissant (6) porte, de même un plateau supérieur mobile (9) en rotation selon un axe vertical (Y, Y') formant pivot. Des moyens facilitant le pivotement dudits plateau sont aménagés sur le plateau inférieur (6) ou/et sur le plateau supérieur (9). Ces moyens peuvent être identiques à ceux utilisé pour le plateau fixe (7) surmonté d'un plateau rotatif (8) décrit précédemment.

Selon l'invention, le dispositif de manipulation (1) de moule d'injection, comporte des moyens d'indexages (MI) permettant de positionner les plateaux supérieurs pivotants (8, 9) dans des positions prédéterminées par rapport aux plateaux inférieurs correspondants (7, 8). Ces moyens permettront par exemple de positionner les plateaux pivotants de façon à avoir leurs bordures adjacentes respectives (14, 15) accolées l'un à l'autre, en position d'attente du moule (100), et pour permettre d'ouvrir et de fermer le moule (100) sans en abîmer les colonages.

Par ailleurs, le dispositif de l'invention comporte des moyens pour bloquer (MB) les plateaux supérieurs pivotant (8, 9) dans une position choisie, qui pourrait être autre que celle prédéterminée par les moyens d'indexage.

Les moyens d'indexages (MI) et les moyens de blocages (MB) sont constitués par des goupilles traversàntes, des visses bloquantes, des leviers ou autres sans pour autant sortir du champ de l'invention.

Pour positionner le moule (100) sur le dispositif (1), les plateaux (6, 7, 8, 9) doivent être en position rapprochée telle qu'illustrée aux figures 4a, 4b, 3a, 3b, c'est à dire accolés l'un à l'autre. Dans la position rapprochée, l'opérateur devra poser son moule sur le dispositif de façon à ce que le plan de joint (PJM) du moule (100) séparant les deux parties (100a, 100b), soit confondu avec le plan vertical (P) séparant les deux plateaux (7,8 - 6, 9).

Le dispositif (1) de l'invention, permet, de passer de la position illustrée à la figure 4b, aux positions illustrées aux figures 4c, 4d, 4e.

Ainsi, une fois que le moule (100) est disposé sur le dispositif dans sa position rapprochée des plateaux (figure 4b), l'opérateur n'aura qu'à manuellement et sans effort, déplacer en translation selon F, le plateau mobile, pour l'éloigner du plateau fixe (figure 4c). Il y aura alors séparation du des deux parties du moule (100a, 100b) tel qu'illustré à la figure 4c.

En d'autres termes, une fois le moule posé sur le dispositif, la présente invention va permettre à l'utilisateur d'ouvrir manuellement le moule, grâce au coulissement d'un des plateaux. Par ailleurs l'opérateur pourra faire pivoter chaque partie (100a, 100b) du moule (100), grâce à la rotation des plateaux supérieurs pivotants (8, 9), tel qu'illustré aux figures 4d, 4e, afin d'accéder à toutes les parties du moule et notamment à son empreinte, pour y faire les travaux nécessaires.

Par ailleurs, le dispositif de manipulation (1) de moule d'injection de l'invention comporte des butées (16) situées avantageusement sur les extrémités des rails glissières (4) ou sur les extrémités des poutres (2, 3) formant le châssis (20). Cependant, les dites butés (16) peuvent être amovibles et repositionnable pour pouvoir, suivant les besoins, choisir une course maximum de déplacement du plateau coulissant. Aussi, les butés (16) de l'invention pourront bloquer le/les plateaux coulissants (6) dans une position ouverte quelle qu'elle soit, pour éviter que le plateau coulissant (6) surmonté du plateau pivotant (9) avec le moule (100) posé et pivoté ne vienne involontairement contre l'autre partie du moule, ce qui pourrait l'endommager. Mais aussi pour éviter que le ledit plateau coulissant ne coulisse au-delà des rails glissières. Ces butés (16), selon le mode préféré de l'invention, sont constitué par des pions qui viennent s'emboîter dans des orifices aménagés sur le rail glissière (4) ou sur le châssis (20).

Selon un autre mode de réalisation non représenté, les moyens de guidages sont constitué par un L dont la portion verticale du L est fixé à son extrémité supérieure sur la surface inférieure du plateau inférieur coulissant. Cette portion verticale permet de limiter le jeu de débattement horizontal du plateau, et comporte avantageusement des moyens pour facilité son glissement contre la tranche de la glissière. Ces moyens peuvent être réalisés par des galets, des chemins de billes, ou autres sans pour autant sortir du champ de l'invention. La portion horizontale du L formant les moyens de guidage permet de limiter le jeu de débattement vertical du plateau mobile. Ainsi, selon ce mode de réalisation de l'invention les glissières sont enfermées entre deux recyclages de billes, un sur la surface inférieure du plateau mobile et l'autre sur la surface supérieure de la portion horizontale du L constituant des moyens de guidages en contact avec la surface inférieur de la glissière pour limité le jeux de débattement vertical.

Selon un autre mode de réalisation de l'invention non représenté, des moyens de glissement sont aménagés sur la surface inférieure du plateau inférieur coulissant. Selon ce mode, lesdits moyens sont constitués par recyclage de billes dans une gorge, aménagé dans la surface inférieure du plateau inférieur coulissant, en regard du châssis ou de la glissière.

Bien entendu, l'invention n'est pas limitée aux modes de réalisation décrits et représentés à titre d'exemples, mais elle comprend aussi tous les équivalents techniques ainsi que leurs combinaisons.

Ainsi, le châssis pourrait être réalisé par une plaque avec des rainures. Il va de soit aussi que les deux plateaux pourraient être mobiles en translation sans pour autant sortir du cadre de l'invention.

## Revendications

1. Dispositif de manipulation (1) d'outillages comprenant deux paries (10a, 100b), ledit dispositif étant du type constitué d'un châssis (20) et au moins un plateau formant table, destiné à recevoir l'outillage, **caractérisé en ce qu'**il comprend deux plateaux (6, 9 - 7, 8) disposés horizontalement dont l'un au moins est disposé coulissant sur le châssis (20) afin de pouvoir être déplacé en translation par rapport au l'autre plateau, d'une position rapprochée vers une position éloignée et inversement, afin de permettre l'ouverture et la fermeture manuelle de l'outillage.

2. Dispositif de manipulation (1) selon la revendication 1, **caractérisé en ce que** l'un au moins des plateaux (6, 9 - 7, 8) comprend un plateau inférieur (6- 7) et un plateau supérieur pivotant (8- 9) mobile en rotation par rapport au plateau fixe correspondant, selon un axe vertical (Y, Y').

3. Dispositif de manipulation (1) selon l'une quelconque des revendications précédentes **caractérisé en ce que** le châssis (20) comporte des rails glissières (4) sur lesquelles coulissent le/les plateaux.

4. Dispositif de manipulation (1) selon l'une quelconque des revendications précédentes **caractérisé en ce** des moyens de guidages (5) sont prévus entre le/les plateaux coulissants (6) et le/les rails glissières (4).

5. Dispositif de manipulation (1) selon l'une quelconque des revendications précédentes **caractérisé en ce que** le châssis (20) est composé de deux poutres longitudinales (2) maintenues en écartement par deux poutres latérales parallèles (3).

6. Dispositif de manipulation (1) selon l'une quelconque des revendications précédentes **caractérisé en ce que** les moyens de guidage et de coulissement sont constitués par des chemins de billes (10).

7. Dispositif de manipulation (1) selon l'une quelconque des revendications précédentes **caractérisé en ce qu'**il comporte des butés (16) dont au moins une est amovible et repositionnable afin d'arrêter et de positionner le/les plateaux coulissants (6) par rapports aux rails glissières (4).

8. Dispositif de manipulation (1) selon l'une quelconque des revendications précédentes **caractérisé en ce qu'**il comporte des moyens de blocages (MB) et d'indexages du/des plateaux rotatifs (8, 9) en positions.

## Claims

1. Device (1) for manipulating tools, comprising two parts (10a, 10b), the said device being of the type consisting of a frame (20) and at least one plate forming a table which is intended to receive the tool, **characterised in that** it comprises two plates (6, 9 - 7, 8) disposed horizontally, at least one of which is disposed slidably on the frame (20) so as to be able to be moved in translation with respect to the other plate, from a close position to a distant position and vice versa, so as to allow the manual opening and closing of the tool.

2. Manipulation device (1) according to claim 1, **characterised in that** at least one of the plates (6, 9 - 7, 8) comprises a bottom plate (6-7) and a pivoting top plate (8-9) able to move in rotation with respect to the corresponding fixed plate, about a vertical axis (Y, Y').

3. Manipulation device (1) according to any one of the preceding claims, **characterised in that** the frame (20) comprises slide rails (4) on which the plate or plates slide.

4. Manipulation device (1) according to any one of the preceding claims, **characterised in that** guide means (5) are provided between the sliding plate or plates (6) and the slide rail or rails (4).

5. Manipulation device (1) according to any one of the preceding claims, **characterised in that** the frame (20) is composed of two longitudinal beams (2) held separated by two parallel lateral beams (3).

6. Manipulation device (1) according to any one of the preceding claims, **characterised in that** the guide and sliding means are formed by ball tracks (10).

7. Manipulation device (1) according to any one of the preceding claims, **characterised in that** it comprises stops (16), at least one of which is removable and able to be positioned so as to stop and position the sliding plate or plates (6) with respect to the slide rails (4).

8. Manipulation device (1) according to any one of the preceding claims, **characterised in that** it comprises means (MB) of locking and locating the rotary plate or plates (8, 9) in position.

## Patentansprüche

1. Vorrichtung (1) zur Handhabung von Werkzeugen umfassend zwei Teile[KK1] (10a, 100b), wobei die Vorrichtung aus einem Rahmen (20) und aus mindestens einer einen Tisch bildenden Platte zur Aufnahme des Werkzeugs besteht, **dadurch gekennzeichnet, dass** sie zwei Platten (6, 9 - 7, 8) umfasst, die horizontal angeordnet sind und von denen mindestens eine verschieblich auf dem Rahmen (20) angeordnet ist, um im Verhältnis zur anderen Platte von einer nahen Position zu einer entfernten Position und umgekehrt verschoben werden zu können und die Öffnung und Schließung des Werkzeugs von Hand zu ermöglichen.

2. Vorrichtung (1) zur Handhabung nach Anspruch 1, **dadurch gekennzeichnet, dass** die wenigstens eine der Platten (6, 9 - 7, 8) eine untere Platte (6 - 7) und eine im Verhältnis zur entsprechenden feststehenden Platte um eine Vertikalachse (Y, Y') drehbare, schwenkbare obere Platte (8 - 9) umfasst.

3. Vorrichtung (1) zur Handhabung nach einem der vorstehenden Ansprüche, **dadurch gekennzeichnet, dass** der Rahmen (20) Gleitschienen (4) aufweist, auf denen die Platte/n verschieblich gelagert ist/sind.

4. Vorrichtung (1) zur Handhabung nach einem der vorstehenden Ansprüche, **dadurch gekennzeichnet, dass** Führungsmittel (5) zwischen der/den verschieblichen Platte/n (6) und der/den Gleitschiene/n (4) vorgesehen sind.

5. Vorrichtung (1) zur Handhabung nach einem der vorstehenden Ansprüche, **dadurch gekennzeichnet, dass** der Rahmen (20) aus zwei Längsträgern (2) besteht, die durch zwei parallele Seitenträger (3) auf Abstand zueinander gehalten werden.

6. Vorrichtung (1) zur Handhabung nach einem der vorstehenden Ansprüche, **dadurch gekennzeichnet, dass** die Führungs- und Verschiebemittel durch Kugellaufbahnen (10) gebildet sind.

7. Vorrichtung (1) zur Handhabung nach einem der vorstehenden Ansprüche, **dadurch gekennzeichnet, dass** sie Widerlager (16) aufweist, von denen mindestens ein Widerlager zur Feststellung und zur Positionierung der verschieblichen Platte/n (6) im Verhältnis zu den Gleitschienen (4) entfernbar und neu positionierbar ist.

8. Vorrichtung (1) zur Handhabung nach einem der vorstehenden Ansprüche, **dadurch gekennzeichnet, dass** sie Mittel zum Blockieren (MB) und zum Indexieren der drehbaren Platte/n (8, 9) in ihrer Position umfasst.
